# EUROPEAN PATENT SPECIFICATION

(11) **EP 0 986 926 B1**
(45) Date of publication and mention of the grant of the patent: **24.10.2007**
(21) Application number: 98928700.8
(22) Date of filing: 20.05.1998
(51) Int. Cl.: H04Q 7/22

(54) **IMPROVEMENTS IN, OR RELATING TO, CELLULAR RADIO COMMUNICATION SYSTEMS**
VERBESSERUNGEN FÜR EIN ZELLULARES FUNKKOMMUNIKATIONSSYSTEM
AMELIORATIONS CONCERNANT DES SYSTEMES DE RADIOCOMMUNICATION CELLULAIRES

(30) Priority: 04.06.1997 SE 9702124
(43) Date of publication of application: 22.03.2000
(73) Proprietor: TELIA AB, 123 86 Farsta (SE)
(72) Inventor: URBY, Göran, S-663 33 Skoghall (SE); EMILSSON, Stellan, S-655 94 Karlstad (SE)
(74) Representative: Akerman, Marten Lennart
(86) International application number: PCT/SE1998/000950
(87) International publication number: WO 1998/056197

(56) References cited:
- EP-A- 0 647 076
- EP-A- 0 748 139
- EP-A- 0 752 793
- WO-A-95/21511
- WO-A-95/35636
- WO-A-96/27986

## Description

The invention relates to a cellular radio communication system, including cellular radio communication network, such as a Global System for Mobile Communication (GSM) network, that is adapted to present geographically related information to system users and, in particular, to such systems that offer a 'short message service' (SMS) for updating the geographically related information. The invention also relates to a method for distributing and displaying geographically related information using SMS messages.

The mobile cellular radio communication network, known as GSM, which is covered by standards developed and promulgated by the European Telecommunications Standards Institute (ETSI), offers a variety of services to users, other than voice, including, inter alia, data services, short message services, and broadcast services. The ETSI GSM Standards specify, in addition to the radio interface, a complete telecommunications network with radio access by the user. Since the architecture, and operational aspects, of GSM are well known to persons skilled in the art, only those aspects of GSM which are of direct relevance to the present invention will be covered by this patent specification.

SMS is a feature which is incorporated into digital mobile telephone networks, and can be divided into two types, point-to-point services (SMS-PP), and broadcast services (SMS-CB).

SMS-PP allows a brief message (up to 160 characters) to be sent between a mobile telephone and a Service Centre (SC). Larger messages can optionally be created by concatenating multiple massages (the protocol allows up to 10 messages to be concatenated in this way). The SC operates in a store and forward manner, being able to send, or receive, messages from a wide variety of sources, in addition to a GSM mobile telephone, for example, fax, normal telephone, dial up modems, public, or private data networks etc.. This means that the service is not limited to sending messages between GSM mobile telephones, but can be used to send, or receive, messages from the wider telecommunications network.

Messages are handled in the SC in a store and forward manner. This means that when a message is received in the SC, it will be stored in the SC and will be forwarded onto the ultimate destination when the destination is able to receive it. Therefore, a message can be sent to a telephone which is currently switched off. and the SC will store the message until such time as the telephone is switched on again. Mechanisms exist throughout the GSM infrastructure for informing the SC that a telephone, for which it has a pending message, is now available. Options also exist for informing the originator that the message has been received at the destination.

The telephone messages can be stored either in non-volatile memory in the telephone, or in the SIM card. These can be messages created by the user, or can be messages received from the SC. Normally, when a message is received, it will be stored either in the telephone, or the SIM, and an indication given to the user that a new message has been received. The user can then retrieve the message from the telephone and display it. As an option, the message can also be coded by the originator so that it is immediately displayed rather than stored.

SMS-CB allows the network to broadcast messages to any interested user. A message is simply broadcast repeatedly at intervals until such time as it is no longer valid. Messages can consist of up to 15 pages, and the same message may be broadcast in multiple languages.

The document EP-A-0748139 discloses a communication system for transmitting text messages wherein a mobile terminal is coupled to a portable computer which is used to generate, manipulate and store text messages which can be transmitted or received over a radio network via the mobile terminal.

The document WO96/27986 discloses a method and apparatus for transmitting and displaying data wherein a short code identifying a graphical element is transmitted and wherein the graphical element is displayed by calling up the graphical element from a memory of the display device.

It is very important, when travelling, i.e. in mobile situations, for the person concerned to have access to current information relating to the place where he/she is presently located and to be able to present the information in a very easily understandable manner. An, ideal method of achieving this would be to superpose information consisting of symbols on a graphic map image. For effective operation of this method, provision must be made for the information to be distributed, i.e. updated, on an on-going basis and as speedily as possible. An ideal medium for effecting distribution/updating of the information would be a radio-based information distribution system having a required geographical coverage. However, the problem with systems of this type is that they only offer a very limited bandwidth. There is, therefore, a need for a technical solution to this problem that uses a bandwidth which does not encroach on the space available for speech traffic but which can cope with the updating of the graphic map image in an effective manner. Furthermore, the technical solution to the problem needs to be based on standard components in order to make it attractive to a wide range of consumers.

It is an object of the present invention to provide a solution to the technical problem, outlined above, through the use of a cellular radio communication system, such as a GSM system, that is adapted to present geographically related information to system users, for example, on a display screen of a portable personal computer (PPC). In particular, the displayed information is updated through use of a 'short message service' (SMS) provided by the radio-based system.

It is another object of the present invention to provide a method for distributing and displaying geographically related information using a cellular radio communication system that offers a SMS service.

According to a first aspect of the present invention, there is provided, a cellular radio communication system including a cellular radio communication network adapted to provide a short message service (SMS) and including a plurality of mobile telephone stations and a number of base stations, each one of which is connected to a public switched telephone network and adapted to communicate with a number of said mobile stations, wherein said system includes at least one portable graphic display unit adapted to communicate with said network, via a mobile station, using said short message service (SMS) and in response to receipt of SMS messages, to selectively retrieve and display stored graphic map images and to selectively superpose stored geographically related information symbols on a displayed image, characterised in that an SMS message defines at least one symbol to be displayed, together with its geographic coordinates. The said at least one graphic display unit may form part a portable personal computer (PPC), in which case, the PPC is adapted to communicate with said network, via a mobile station, using the short message service (SMS). The graphic map images and symbols are preferably stored by the PPC.

Said PPC may include a display screen; storage means having stored therein a series of graphic map images and a number of geographically related information symbols for selective display on said display screen, each one of said symbols being adapted to be selectively superposed on a displayed map image to indicate geographically related information; and selection means, responsive to receipt of SMS messages, for selectively retrieving a map image and symbols from said storage means for display on said display screen.

Preferably, the information symbols, superposed on a displayed map image, are continually updated with current information by the SMS messages.

The graphic map images and information symbols may be stored in a CD-ROM and/or a hard disc, which may form part of a PPC.

Preferably, the stored information symbols are predefined and adapted for various applications, and the SMS message define at least one symbol required to be displayed, together with its geographic coordinates. The PPC is preferably adapted, on receipt of the SMS message, to superpose the said at least one symbol on a graphic map image of the geographic area concerned, at a position defined by said geographic coordinates.

A SMS cell broadcast facility may be used to distribute messages defining geographically related information considered to be of general application by a network operator. With this facility, SMS messages are used to continually updated information symbols, superposed on a displayed graphic map image, with current information. The SMS cell broadcast facility may be adapted to limit the volume of distributed information by transmitting a number of SMS messages, for different applications, over different geographic locations. In addition, the SMS messages may be repeatedly broadcast at intervals for a period of time during which a message is valid. Furthermore, the SMS messages may include an indication, identifiable by a mobile station, that previously transmitted information is being updated.

The SMS cell broadcast facility may be used for the distribution of messages concerning the current weather situation, in different geographic areas; local tourist information; road information; traffic information; the geographic locations of petrol filling stations of different companies, bank, retail outlets and the like: the availability of hotel vacancies; and, in a sailing boat race, the relative positions of the boats in the race.

Alternatively, the SMS messages may be addressed to unique users, or groups of users, and the SMS messages may define geographic related information selected by a network user. This geographically related information may be in respect of a limited geographic area. The limited geographic area may be local to a user, or group of users, for whom the information has been requested, the geographic limits being indicated either manually, or through use of a mobile station position-fixing facility. The manual indication may be given by an area marked on a synoptical map by said user, or group of users.

The limited geographic area may be local to a user, or group of users, for whom the information has been requested, and a mobile station of said user, or each member of said group of users, may be provided with a GPS receiver for determining said mobile station's geographic location. With this arrangement, each mobile station is adapted to transmit the respective location information to a service provider using the SMS message facility

The SMS messages addressed to unique users, or groups of users, may be adapted for use during military exercise, or by police forces on reconnaissance, fire-fighters fighting a fire, such as a forest fire, or a taxis driver to determine the location of other taxis in the same taxi fleet.

According to a second aspect of the present invention, there is provided, in a cellular radio communication system including a cellular radio communication network adapted to provide a short message service (SMS), in which said network includes a plurality of mobile telephone stations and a number of base stations, each one of which is connected to a public switched telephone network and adapted to communicate with a number of said mobile stations, a method for distributing and displaying geographically related information using SMS messages, comprising the steps of storing a series of graphic map images and a number of geographically related information symbols for selective display on a portable display unit, each one of said symbols being adapted to be selectively superposed on a displayed map image to indicate geographically related information; and in response to receipt of SMS messages from said network, retrieving and displaying a stored map image and symbols defined by said SMS messages. The method may be further characterised by the step of continually updating the information symbols, superposed on a displayed map image, with current information defined by said SMS messages, wherein the SMS message defines at least one symbol to be displayed, together with its geographic coordinates. The storage of said graphic map images and information symbols may effected by a CD-ROM and/or a hard disc, which may form part of a PPC.

In a preferred method, the stored information symbols are predefined and adapted for various applications, and, on receipt of said SMS message, said at least one symbol is superposed on a displayed graphic map image at a position defined by said geographic coordinates.

The information symbols may include text information and an arrow adapted to be pointed at geographic coordinates of a map image defined by an SMS message

The method may be further characterised by distributing SMS messages using a SMS cell broadcast facility of said network, said distribute messages defining geographically related information considered to be of general application by a network operator. This method may include the step of using said SMS messages to continually update information symbols, superposed on a displayed graphic map image, with current information. The method may also include the step transmitting a number of SMS messages, for different applications, over different geographic locations, in order to limit the volume of distributed information by each of said SMS messages. The method may also include the step of repeatedly broadcasting said SMS messages, at intervals, for a period of time during which a message is valid.

Preferably, the method includes, in said SMS messages, an indication, identifiable by a mobile station, that previously transmitted information is being updated.

In a preferred method, the SMS cell broadcast facility is used for the distribution of messages concerning the current weather situation, in different geographic areas: local tourist information; road information; traffic information; the geographic locations of petrol filling stations of different companies; the availability of hotel vacancies; and, in a sailing boat race, the relative positions of the boats in the race.

The method may be further characterised by the step of addressing said SMS messages to unique users or groups of users and the SMS messages may define geographic related information selected by a network user. The geographically related information may be for a limited geographic area, the limited geographic area may be local to a users, for whom the information has been requested and one geographic limits may be indicated either manually, or through use of a mobile station position fixing facility. The manual indication may be given by marking an area on a synoptical map.

When the limited geographic area is local to a user, or group of users, for whom the information has been requested, a mobile station of said user, or each member of said group of users, may be provided with a GPS receiver, in which case, the method may include the steps of determining a geographical location of a mobile station using said GPS receiver, and transmitting said location information to a service provider using said SMS message facility.

The method of addressing SMS messages to unique users, or groups of users, is preferably used during military exercise, or by police forces on reconnaissance, fire-fighters fighting a fire, such as a forest fire, or a taxis driver to determine the location of other taxis in the same taxi fleet.

The cellular radio communication network is preferably a GSM network.

According to a third aspect of the present invention, there is provided a receiver for use with a system as outlined in preceding paragraphs, wherein said receiver includes a transceiver: storage means for storing a series of graphic map images and a number of geographically related information symbols or selective display, each one of said symbols being adapted to be selectively superposed on a displayed map image to indicate geographically related information and display means for displaying said graphic map images and said symbols, responsive to receipt of SMS messages, for selectively retrieving a map image and symbols from said storage means for display on said display means, characterised in that it is arranged for an SMS message defining at least one symbol to be displayed, together with its geographic coordinates. The transceiver is preferably a GSM transceiver adapted to receive and transmit SMS messages defining geographically related information. The transceiver may include a GPS receiver.

The foregoing and other features of the present invention will be better understood from the following description of specific embodiments of the present invention.

It will be seen from the subsequent description that the present invention provides a solution to the technical problem, outlined in preceding paragraphs, through the use of a cellular mobile radio communication system including a cellular mobile radio communication network, such as GSM, in association with at least one portable personal computer (PPC), for example, a laptop computer, adapted for communication with a subscriber's cellular mobile telephone handset. It will be seen from the subsequent description that the mobile telephone handset is used to transfer geographically related information, received from the cellular mobile radio communication network to the PPC for display.

The PPC of the present invention includes storage means for storing graphic map images and symbols, adapted for various applications, to convey geographically related information to a user of the PPC, means for retrieving the map images and symbols from the storage means, and a display screen for displaying a retrieved symbol, or symbols, superimposed on a retrieved graphic map image. The storage means may, for example, be a CO-ROM and/or a hard disc. Thus, in addition to the permanent/semi-permanent data storage in a CD-ROM, variable data could be stored on a hard disc, with the contents of both of these storage arrangements being selectively accessible for display.

The various applications for which the symbols may be used include, inter alia, weather, traffic information, tourist information, and information on a wide range of facilities, such as filling stations, banks, retail outlets, and other facilities that are likely to be of interest to individuals, when travelling. The symbols may also include textual information and an arrow adapted to be pointed at geographic coordinates of a map image, i.e. for pointing at, and giving information in respect of, a selected region of a displayed map to which the received information relates.

Thus, the PPC's software is adapted, on receipt of details concerning map references, i.e. map coordinates, and geographically related information required by, or of interest to, a user of the PPC, via a mobile telephone connected thereto, to:
- identify and retrieve, from the storage means, a graphic map image for the geographic area where the user of the PPC is currently located and to which the received information relates;
- display the retrieved image on the PPC's display screen;
- identify and retrieve, from the storage means, a symbol, or symbols, representative of the geographically related information required by, or of interest to, the user of the PPC; and
- arrange (superpose) the retrieved symbol(s) on the displayed map image at an appropriate geographic location, or locations.

In order to enable the graphic map images to be continuously updated with current information in a simple and effective manner, the present invention is adapted to distribute details of the symbols and their geographic coordinates by means of a cellular mobile communication network, such as GSM, having a SMS facility. Thus the geographically related information is transmitted to a PPC, via a mobile telephone handset, for display.

Distribution of the updating information to a user's PC can, for example, be effected in either of the following ways:
- a SMS cell broadcast service; or
- SMS messages addressed to unique users, or groups of users.

The SMS cell broadcast service is adapted to distribute symbol information considered by a network operator to be of general application. With this distribution method, the volume of distributed information can be limited through the transmission of a number of SMS messages, for various information, over different geographic areas (LAI base stations). As stated above, the broadcasting message service, SMS-CB, allows messages to be repeatedly broadcast, to users of the cellular mobile communication system, for example, mobile telephone users, at intervals, for a period of time during which the message is valid. Furthermore, the messages can be broadcast in multiple languages and/or can include an indication, identifiable by a mobile telephone, that it has been updated, and/or as to its geographic scope, for, example, the entire cellular network, or a specific region(s) within the cellular network, or a single cell of the network.

It will be directly evident to persons skilled in the art that a subscriber service based on SMS cell broadcasting is well-suited to applications intended to reach many users/subscribers without unduly loading a cellular radio communication system, such as GSM. This service may, for example, be advantageously used for the following public applications:
(a) The current weather situation, in different geographic areas (obtainable from an appropriate weather forecasting centre).
(b) Local tourist information.
(c) Road information (obtainable from a National Road Transport Department).
(d) Traffic information (obtainable from the police, or a motoring organisation).
(e) The geographic locations of petrol filling stations, banks, retail outlets and the like (obtainable from different organisations/companies operating such facilities).
(f) The availability of hotel vacancies.
(g) In a sailing boat race, the positions of all participating boats can be distributed.

As for the distribution method in which messages are addressed to unique users, or groups of users, a user can send a SMS message to a service provider informing the service provider that a specific type of information is required and that only information for a limited geographic area, i.e. local information, should be distributed. The geographic limits of the local area can be indicated either manually, i.e. by the user marking an area on a synoptical map, or through use of a mobile telephone position-fixing facility, for example, the mobile telephone position-fixing options of a GSM network. As an alternative, a mobile telephone can be provide with a GPS receiver that is adapted to determine the geographic coordinates of the mobile telephone which can then be transmitted, via SMS, to the service provider.

The sending of geographically related SMS messages to various users, or groups of users, may, for example, be advantageously used for the following applications:
(a) During military exercises. This will provide an ideal means of obtaining a general overview of the current situation in the field.
(b) Police forces on reconnaissance. This would enable the police to obtain an overview of where other police cars are located in the vicinity.
(c) Fire-fighters fighting a forest fire. A graphic map image could provide an updated picture of the fire's extent and where other fire-fighters are located.
(d) A taxi driver could use the service to determine where his/her company's other cars are located.

It will be seen from the forgoing description that the present invention enables general map images and corresponding information stored, for example, in a portable personal computer (PPC), such as a laptop computer, to be kept updated by using GSM-SMS technology. In other words, the invention uses locally (PPC) stored graphical information, i.e. maps and geographically related information symbols, which can be controlled by a service provider linked to a mobile telephone network, such as a GSM network, by means of a GSM-SMS cell broadcast facility.

Since the graphic map images and symbols are already held by a PPC connected to a network user's mobile telephone station, a particular advantage of the present invention is that a relatively large amount of information can be transmitted on a single narrow-band channel. The reason for this is that the symbols can be arranged (superposed) on a graphical map image by sending only symbol references, i.e. types and coordinates, to a user's PPC. via a mobile telephone handset.

It will be directly evident to persons skilled in the art that present invention can be used for many, particularly, narrow-band multimedia applications.

## Claims

1. A cellular radio communication system including a cellular radio communication network adapted to provide a short message service (SMS) and including a plurality of mobile telephone stations and a number of base stations, each one of which is connected to a public switched telephone network and adapted to communicate with a number of said mobile stations, and including at least one portable graphic display unit adapted to communicate with said network, via a mobile station, using said short message service (SMS) and, in response to receipt of SMS messages, to selectively retrieve and display stored graphic map images and to selectively superpose predefined stored geographically related information symbols on a displayed image **characterised in that** an SMS message defines at least one symbol to be displayed, together with its geographic coordinates.

2. A system as claimed in claim 1, **characterised in that** said at least one graphic display unit forms part a portable personal computer (PPC), and **in that** said PPC is adapted to communicate with said network, via a mobile station, using said short message service (SMS).

3. A system as claimed in claim 2, **characterised in that** said graphic map images and symbols are stored by said PPC.

4. A system according to claim 2 or 3 wherein said PPC includes a display screen; storage means having stored therein a series of graphic map images and a number of geographically related information symbols for selective display on said display screen, each one of said symbols being adapted to be selectively superposed on a displayed map image to indicate geographically related information; and selection means, responsive to receipt of SMS messages, for selectively retrieving a map image and symbols from said storage means for display on said display screen.

5. A system as claimed in any preceding claim **characterised in that** said information symbols, superposed on a displayed map image, are continually updated with current information by said SMS messages.

6. A system as claimed in any preceding claim, **characterised in that** said graphic map images and information symbols are stored in a CD-ROM and/or a hard disc.

7. A system as claimed in claim 6, when appended to any of claims 2 to 5, **characterised in that** said CD-ROM and/or a hard disc forms part of said PPC.

8. A system as claimed in any preceding claim, **characterised in that** said stored information symbols are predefined and adapted for various applications.

9. A system as claimed in claim 7, when appended to any of claims 2 to 7, **characterised in that** said PPC is adapted, on receipt of said SMS message, to superpose said at least one symbol on a graphic map image of the geographic area concerned, at a position defined by said geographic coordinates.

10. A system as claimed in any preceding claim, **characterised in that** said information symbols include text information and an arrow adapted to be pointed at geographic coordinates of a map image defined by an SMS message.

11. A system as claimed in any preceding claim, **characterised in that** a SMS cell broadcast facility is used to distribute messages defining geographically related information considered to be of general application by a network operator.

12. A system as claimed in claim 11, **characterised in that** said SMS messages are used to continually updated information symbols, superposed on a displayed graphic map image, with current information.

13. A system as claimed in claim 11, or claim 12, **characterised in that** said SMS cell broadcast facility is adapted to limit the volume of distributed information by transmitting a number of SMS messages, for different applications, over different geographic locations.

14. A system as claimed in any of claims 11 to 13, **characterised in that** said SMS messages are repeatedly broadcast, at intervals, for a period of time during which a message is valid.

15. A system as claimed in any of claims 11 to 14, **characterised in that** said SMS messages include an indication, identifiable by a mobile station, that previously transmitted information is being updated.

16. A system as claimed in any of claims 11 to 15, **characterised in that** said SMS cell broadcast facility is used for the distribution of messages concerning the current weather situation, in different geographic areas; local tourist information; road information; traffic information; the geographic locations of petrol filling stations of different companies, bank, retail outlets and the like; the availability of hotel vacancies; and, in a sailing boat race, the relative positions of the boats in the race.

17. A system as claimed in any of claims 1 to 10, **characterised in that** SMS messages are addressed to unique users, or groups of users.

18. A system as claimed in claim 17, **characterised in that** said SMS messages define geographic related information selected by a network user.

19. A system as claimed in claim 18, **characterised in that** said geographically related information is for a limited geographic area.

20. A system as claimed in claim 19, **characterised in that** said limited geographic area is local to a user, or group of users, for whom the information has been requested, and **in that** the geographic limits are indicated either manually, or through use of a mobile station position-fixing facility.

21. A system as claimed in claim 20, **characterised in that** said manual indication is given by an area marked on a synoptical map by said user, or group of users.

22. A system as claimed in claim 19, **characterised in that** said limited geographic area is local to a user, or group of users, for whom the information has been requested, **in that** a mobile station of said user, or each member of said group of users, is provided with a GPS receiver for determining said mobile station's geographic location, and **in that** said mobile station is adapted to transmit said location information to a service provider using said SMS message facility.

23. A system as claimed in any of claims 17 to 22, **characterised in that** said SMS messages addressed to unique users, or groups of users, are adapted for use during military exercise, or by police forces on reconnaissance, fire-fighters fighting a fire, such as a forest fire, or a taxis driver to determine the location of other taxis in the same taxi fleet.

24. A system as claimed in any preceding claim **characterised in that** said cellular radio communication network is a GSM network.

25. A method for distributing and displaying geographically related information using SMS messages, said method to be used in a cellular radio communication system including a cellular radio communication network adapted to provide a short message service (SMS) wherein said network includes a plurality of mobile telephone stations and a number of base stations, each one of which is connected to a public switched telephone network and adapted to communicate with a number of said mobile stations, said method comprising the steps of:
- storing a series of graphic map images and a number of geographically related information symbols for selective display on a portable display unit, each one of said symbols being adapted to be selectively superposed on a displayed map image to indicate geographically related information; and
- in response to receipt of SMS messages from said network, retrieving and displaying a stored map image and symbols defined by said SMS messages, wherein the SMS message defines at least one symbol required to be displayed, together with its geographic coordinates.

26. A method as claimed in claim 25, **characterised by** the step of continually updating the information symbols, superposed on a displayed map image, with current information defined by said SMS messages.

27. A method as claimed in claim 25, or claim 26, **characterised by** storing said graphic map images and information symbols in a CD-ROM and/or a hard disc.

28. A method as claimed in claim 27, **characterised in that** said CD-ROM and/or a hard disc forms part of a PPC.

29. A method as claimed in any of claims 25 to 28, **characterised in that** said stored information symbols are predefined and adapted for various applications.

30. A method as claimed in claim 29, **characterised in that**, on receipt of said SMS message, said at least one symbol is superposed on a displayed graphic map image at a position defined by said geographic coordinates.

31. A method as claimed in any of claims 25 to 30, **characterised in that** said information symbols include text information and an arrow adapted to be pointed at geographic coordinates of a map image defined by an SMS message.

32. A method as claimed in any of claims 25 to 31, **characterised by** distributing SMS messages using a SMS cell broadcast facility of said network, said distribute messages defining geographically related information considered to be of general application by a network operator.

33. A method as claimed in claim 32, **characterised by** the step of using said SMS messages to continually update information symbols, superposed on a displayed graphic map image, with current information.

34. A method as claimed in claim 32, or claim 33, **characterised by** the step transmitting a number of SMS messages, for different applications, over different geographic locations, in order to limit the volume of distributed information by each of said SMS messages.

35. A method as claimed in any of claims 32 to 34, **characterised by** the step of repeatedly broadcasting said SMS messages, at intervals, for a period of time during which a message is valid.

36. A method as claimed in any of claims 32 to 35, **characterised by** the step of including, in said SMS messages, an indication, identifiable by a mobile station, that previously transmitted information is being updated.

37. A method as claimed in any of claims 32 to 36, **characterised by** the step of using said SMS cell broadcast facility for the distribution of messages concerning the current weather situation, in different geographic areas; local tourist information; road information; traffic information; the geographic locations of petrol filling stations of different companies; the availability of hotel vacancies; and, in a sailing boat race, the relative positions of the boats in the race.

38. A method as claimed in any of claims 25 to 31, **characterised by** the step of addressing said SMS messages to unique users, or groups of users.

39. A method as claimed in claim 38, **characterised in that** said SMS messages define geographic related information selected by a network user.

40. A method as claimed in claim 39, **characterised in that** said geographically related information is for a limited geographic area.

41. A method as claimed in claim 40, **characterised in that** said limited geographic area is local to a users, for whom the information has been requested, and **in that** the geographic limits are indicated either manually, or through use of a mobile station position fixing facility.

42. A method as claimed in claim 41, **characterised by** the step of said user, or group of users, giving said manual indication by marking an area on a synoptical map.

43. A method as claimed in claim 41, **characterised in that** said limited geographic area is local to a user, or group of users, for whom the information has been requested, **in that** a mobile station of said user, or each member of said group of users, is provided with a GPS receiver, and **in that** said method includes the steps of determining a geographical location of a mobile station using said GPS receiver, and transmitting said location information to a service provider using said SMS message facility.

44. A method as claimed in any of claims 38 to 43, **characterised in that** said SMS messages addressed to unique users, or groups of users, are used during military exercise, or by police forces on reconnaissance, fire-fighters fighting a fire, such as a forest fire, or a taxis driver to determine the location of other taxis in the same taxi fleet.

45. A method as claimed in any of claim 25 to 44, **characterised in that** said cellular radio communication network is a GSM network.

46. A receiver for use with a system as claimed in any of claims 1 to 24, and including a transceiver; storage means for storing a series of graphic map images and a number of geographically related information symbols for selective display, each one of said symbols being adapted to be selectively superposed on a displayed map image to indicate geographically related information; and display means for displaying said graphic map images and said symbols, responsive to receipt of SMS messages, for selectively retrieving a map image and symbols from said storage means for display on said display means **characterised in that** being arranged for an SMS message defining at least one symbol to be displayed, together with its geographic coordinates.

47. A receiver as claimed in claim 46, **characterised in that** said transceiver is a GSM transceiver adapted to receive and transmit SMS messages defining geographically related information.

48. A receiver as claimed in claim 46, or claim 47, **characterised in that** said transceiver includes a GPS receiver.

## Patentansprüche

1. Zellulares Funkkommunikationssystem mit einem zellularen Funkkommunikationsnetzwerk, das angepasst ist, einen Kurznachrichtenservice (SMS) zu liefern, und einschließlich einer Anzahl von Mobiltelefonstationen und einer Anzahl von Basisstationen, von denen jede mit einem öffentlich geschalteten Telefonnetzwerk verbunden ist und ausgebildet ist, mit einer Anzahl der Mobilstationen zu kommunizieren, und mit zumindest einer tragbaren Graphikanzeigeeinheit, die ausgebildet ist, mit dem Netzwerk über eine Mobilstation unter Verwendung des Kurznachrichtenservices (SMS) zu kommunizieren und in Abhängigkeit vom Empfang von SMS-Mitteilungen selektiv gespeicherte Graphikkartenbilder aufzufinden und anzuzeigen und selektiv vorgegebene geographiebezogene Informationssymbole auf einem angezeigten Bild zu überlagern, **dadurch gekennzeichnet, dass** eine SMS-Mitteilung zumindest ein Symbol definiert, das zusammen mit seinen geographischen Koordinaten anzuzeigen ist.

2. System nach Anspruch 1, **dadurch gekennzeichnet, dass** die zumindest eine Graphikanzeigeeinheit einen Teil eines tragbaren Personalcomputers (PPC) bildet und dass der PPC ausgebildet ist, mit dem Netzwerk über Mobilstation unter Verwendung des Kurznachrichtenservices (SMS) zu kommunizieren.

3. System nach Anspruch 2, **dadurch gekennzeichnet, dass** die Graphikkartenbilder und Symbole durch den PPC gespeichert werden.

4. System nach Anspruch 2 oder 3, wobei der PPC einen Anzeigeschirm aufweist, Speichermittel, die darin eine Reihe von Graphikkartenbildern und eine Anzahl von geographiebezogenen Informationssymbolen zum selektiven Anzeigen auf dem Anzeigeschirm speichern, wobei jedes eine der Symbol ausgebildet ist, um selektiv auf einem angezeigten Kartenbild überlagert zu werden, um geographiebezogene Information anzuzeigen, und Auswahlmittel, die abhängig von empfangenen SMS-Nachrichten sind, zum selektiven Auffinden eines Kartenbildes und von Symbolen aus den Speichermitteln zur Anzeige auf dem Anzeigeschirm.

5. System nach einem der vorstehenden Ansprüche, **dadurch gekennzeichnet, dass** die auf einem angezeigten Kartenbild überlagerten Informationssymbole kontinuierlich mit aktuellen Informationen durch die SMS-Mitteilungen aktualisiert werden.

6. System nach einem der vorstehenden Ansprüche, **dadurch gekennzeichnet, dass** die Graphikkartenbilder und Informationssymbole auf einer CD-ROM und/oder einer Festplatte gespeichert sind.

7. System nach Anspruch 6, soweit abhängig von einem der Ansprüche 2 bis 5, **dadurch gekennzeichnet, dass** die CD-ROM und/oder eine Festplatte einen Teil des PPC bilden.

8. System nach einem der vorstehenden Ansprüche, **dadurch gekennzeichnet, dass** die gespeicherten Informationssymbole vordefiniert und an verschiedene Anwendungen angepasst sind.

9. System nach Anspruch 7, soweit abhängig von einem der Ansprüche 2 bis 7, **dadurch gekennzeichnet, dass** der PPC ausgebildet ist bei Empfang der SMS-Mitteilung, das zumindest eine Symbol auf einem Graphikkartenbild des betreffenden geographischen Bereichs in einer Position zu überlagern, die durch die geographischen Koordinaten definiert ist.

10. System nach einem der vorstehenden Ansprüche, **dadurch gekennzeichnet, dass** die Informationssymbole Textinformation und einen Pfeil umfassen, der ausgebildet ist, auf geographische Koordinaten eines Kartenbildes, das durch eine SMS-Mitteilung definiert ist, zu zeigen.

11. System nach einem der vorstehenden Ansprüche, **dadurch gekennzeichnet, dass** eine SMS-Zellensendeeinrichtung verwendet wird, um Nachrichten zu verteilen, die geographiebezogene Informationen definieren, die als eine allgemeine Anwendung durch einen Netzwerkbetreiber angesehen werden.

12. System nach Anspruch 11, **dadurch gekennzeichnet, dass** die SMS-Nachrichten verwendet werden, um kontinuierlich Informationssymbole, die auf einem angezeigten Graphikkartenbild überlagert werden, mit aktuellen Informationen zu aktualisieren.

13. System nach Anspruch 11 oder 12, **dadurch gekennzeichnet, dass** die SMS-Zellsendeeinrichtung ausgebildet ist, das Volumen der verteilten Information durch Übermittlung einer Anzahl von SMS-Mitteilungen für verschiedene Anwendungen für unterschiedliche geographische Orte zu begrenzen.

14. System nach einem der Ansprüche 11 bis 13, **dadurch gekennzeichnet, dass** die SMS-Mitteilungen wiederholt in Intervallen für eine Zeitspanne wiederholt werden, während der eine Mitteilung gültig ist.

15. System nach einem der Ansprüche 11 bis 14, **dadurch gekennzeichnet, dass** die SMS-Mitteilungen eine durch eine Mobilstation identifizierbare Anzeige enthalten, dass die vorher übermittelte Information aktualisiert wird.

16. System nach einem der Ansprüche 11 bis 15, **dadurch gekennzeichnet, dass** die SMS-Zellsendeeinrichtung zur Verteilung von Mitteilungen verwendet wird, die die momentane Wettersituation in unterschiedlichen geographischen Bereichen betreffen, lokale Touristeninformationen, Straßeninformationen, Verkehrsinformationen, die geographischen Orte von Tankstellen verschiedener Betreiber, Banken, Einzelhandel-Outlets und dergleichen, die Verfügbarkeit von Hotelplätzen und, bei einer Segelregatta, die Relativpositionen der Boote im Rennen.

17. System nach einem der Ansprüche 1 bis 10, **dadurch gekennzeichnet, dass** die SMS-Mitteilungen an einzelne Benutzer oder an Gruppen von Benutzern adressiert sind.

18. System nach Anspruch 17, **dadurch gekennzeichnet, dass** die SMS-Mitteilungen geographiebezogene Informationen definieren, die durch einen Netzwerkbenutzer ausgewählt werden.

19. System nach Anspruch 18, **dadurch gekennzeichnet, dass** die geographiebezogene Information sich auf einen begrenzten geographischen Bereich bezieht.

20. System nach Anspruch 19, **dadurch gekennzeichnet, dass** der begrenzte geographische Bereich lokal für einen Benutzer oder eine Gruppe von Benutzern ist, für wen die Information angefordert wurde, und dass die geographischen Grenzen entweder manuell oder durch die Verwendung einer die Mobilstation positionsfixierenden Einrichtung angezeigt werden.

21. System nach Anspruch 20, **dadurch gekennzeichnet, dass** die manuelle Anzeige durch einen auf einer synoptischen Karte markierten Bereich durch den Benutzer erfolgt oder für Gruppen von Benutzern.

22. System nach Anspruch 19, **dadurch gekennzeichnet, dass** der begrenzte geographische Bereich für einen Verwender oder eine Gruppe von Verwendern lokal ist, für den die Information angefordert wurde, dass eine Mobilstation des Verwenders oder jedes Mitgliedes der Gruppe von Verwendern mit einem GPS-Empfänger versehen ist zum Bestimmen des geographischen Ortes der Mobilstation und dass die Mobilstation ausgebildet ist, die Positionsinformation an einen Service-Provider unter Verwendung der SMS-Mitteilungseinrichtung zu übermitteln.

23. System nach einem der Ansprüche 17 bis 22, **dadurch gekennzeichnet, dass** die SMS-Mitteilungen, die ein einzelner Verwender oder Gruppen von Verwendern versandt werden, ausgebildet sind, zur Verwendung während militärischer Übungen oder durch Polizeikräfte im Einsatz, Feuerwehren während der Brandbekämpfung, beispielsweise Waldbrände, oder Taxifahrer zur Bestimmung des Ortes anderer Taxis in derselben Taxiflotte.

24. System nach einem der vorstehenden Ansprüche, **dadurch gekennzeichnet, dass** das zellulare Funkkommunikationsnetzwerk ein GSM-Netzwerk ist.

25. Verfahren zum Verteilen und Anzeigen von geographiebezogenen Informationen unter Verwendung von SMS-Mitteilungen, wobei das Verfahren in einem zellularen Funkkommunikationsnetzwerk zum Verwenden ist, das ein zellulares Funkkommunikationsnetzwerk einschließt, das ausgebildet ist, einen Kurzmitteilungs-Service (SMS) anzubieten, wobei das Netzwerk eine Anzahl von Mobiltelefonstationen aufweist und eine Anzahl von Basisstationen, von denen jede mit einem öffentlich geschalteten Telefonnetzwerk verbunden ist und ausgebildet ist, mit einer Anzahl von Mobilstationen zu kommunizieren, wobei das Verfahren die Schritte aufweist:
- Speichern einer Reihe von Graphikkartenbildern und einer Anzahl von geographiebezogenen Informationssymbolen zum selektiven Anzeigen auf einer tragbaren Anzeigeeinheit, wobei jedes der Symbole ausgebildet ist, selektiv auf einem dargestellten Kartenbild überlagert zu werden, um geographiebezogene Informationen anzuzeigen, und
- in Abhängigkeit vom Empfang von SMS-Mitteilungen aus dem Netzwerk das Wiederauffinden und das Anzeigen eines gespeicherten Kartenbildes und von Symbolen, die durch die SMS-Mitteilungen definiert sind, wobei die SMS-Mitteilung zumindest ein Symbol definiert, das zur Anzeige angefordert wird, zusammen mit seinen geographischen Koordinaten.

26. Verfahren nach Anspruch 25, **gekennzeichnet durch** den Schritt des kontinuierlichen Aktualisierens der Informationssymbole, die auf dem angezeigten Kartenbild überlagert sind, mit aktuellen Informationen, die **durch** die SMS-Mitteilungen definiert werden.

27. Verfahren nach Anspruch 25 oder 26, **gekennzeichnet durch** Speichern der Graphikkartenbilder und Informationssymbole auf einer CD-ROM und/oder einer Festplatte.

28. Verfahren nach Anspruch 27, **dadurch gekennzeichnet, dass** die CD-ROM und/oder eine Festplatte einen Teil eines PPCs bildet.

29. Verfahren nach einem der Ansprüche 25 bis 28, **dadurch gekennzeichnet, dass** die gespeicherten Informationssymbole vordefiniert sind und für verschiedene Anwendungen angepasst sind.

30. Verfahren nach Anspruch 29, **dadurch gekennzeichnet, dass** bei Empfang der SMS-Mitteilung das zumindest eine Symbol auf einem angezeigten Graphikkartenbild in einer Position überlagert wird, die durch die geographischen Koordinaten definiert ist.

31. Verfahren nach einem der Ansprüche 25 bis 30, **dadurch gekennzeichnet, dass** die Informationssymbole Textinformation und einen Pfeil umfassen, der ausgebildet ist, auf die geographischen Koordinaten eines Kartenbildes, das durch eine SMS-Mitteilung definiert ist, zu zeigen.

32. Verfahren nach einem der Ansprüche 25 bis 31, **gekennzeichnet durch** Verteilung von SMS-Mitteilungen unter Verwendung einer SMS-Zellsendeeinrichtung des Netzwerkes, wobei die verteilten Mitteilungen geographisch bezogene Informationen betreffen, die von einem Netzwerkbetreiber als generelle Anwendung angesehen werden.

33. Verfahren nach Anspruch 32, **gekennzeichnet durch** den Schritt der Verwendung der SMS-Mitteilungen zum kontinuierlichen Aktualisieren von Informationssymbolen, die einem angezeigten Graphikkartenbild überlagert sind, mit aktuellen Informationen.

34. Verfahren nach Anspruch 32 oder 33, **gekennzeichnet durch** den Schritt der Übermittlung einer Anzahl von SMS-Mitteilungen für verschiedene Anwendungen über unterschiedliche geographische Orte, um das Volumen der verteilten Information **durch** jede der SMS-Mitteilungen zu begrenzen.

35. Verfahren nach einem der Ansprüche 32 bis 34, **gekennzeichnet durch** den Schritt des wiederholten Aussendens der SMS-Mitteilungen in Intervallen für eine Zeitspanne, während der die Mitteilung gültig ist.

36. Verfahren nach einem der Ansprüche 32 bis 35, **gekennzeichnet durch** den Schritt des Einfügens in der SMS-Mitteilung einer Anzeige, die **durch** eine Mobilstation identifizierbar ist, dass die vorher übermittelte Information aktualisiert wird.

37. Verfahren nach einem der Ansprüche 32 bis 36, **gekennzeichnet durch** den Schritt der Verwendung der SMS-Zellenendeeinrichtung zum Verteilen von Mitteilungen bezüglich der momentanen Wettersituation in unterschiedlichen geographischen Bereichen, lokaler Touristeninformationen, Straßeninformationen, Verkehrsinformationcn, der geographischen Orte von Tankstationen unterschiedlicher Betreiber, der Verfügbarkeit von Hoteleinrichtungen und, bei einer Segelregatta, der Relativpositionen der Boote im Rennen.

38. Verfahren nach einem der Ansprüche 25 bis 31, **gekennzeichnet durch** den Schritt der Adressierung der SMS-Mitteilungen an einzelne Verwender oder an Gruppen von Verwendern.

39. Verfahren nach Anspruch 38, **dadurch gekennzeichnet, dass** die SMS-Mitteilungen geographiebezogene Informationen betreffen, die durch einen Netzwerkbetreiber ausgewählt werden.

40. Verfahren nach Anspruch 39, **dadurch gekennzeichnet, dass** die geographiebezogenen Informationen sich auf einen begrenzten geographischen Bereich beziehen.

41. Verfahren nach Anspruch 40, **dadurch gekennzeichnet, dass** der begrenzte geographische Bereich für einen Benutzer lokal ist, für den die Information angefordert wurde, und dass die geographischen Grenzen entweder manuell oder durch die Verwendung einer Mobilstations-Positionsfixierungseinrichtung angezeigt werden.

42. Verfahren nach Anspruch 41, **gekennzeichnet durch** den Schritt, dass ein Verwender oder eine Gruppe von Verwendern die manuelle Anzeige **durch** Markierung eines Bereichs auf einer synoptischen Karte durchgeführt wird.

43. Verfahren nach Anspruch 41, **dadurch gekennzeichnet, dass** der begrenzte geographische Bereich für einen Verwender oder eine Gruppe von Verwendern lokal ist, für den die Information angefordert wurde, dass eine Mobilstation des Verwenders oder jedes Mitglieds der Gruppe von Verwendern mit einem GPS-Empfänger versehen ist und dass das Verfahren die Schritte aufweist der Bestimmung eines geographischen Ortes einer Mobilstation unter Einsatz des GPS-Empfängers und Übermittlung der Ortsinformation an einen Service-Provider unter Einsatz der SMS-Mitteilungseinrichtung.

44. Verfahren nach einem der Ansprüche 38 bis 43, **dadurch gekennzeichnet, dass** die SMS-Mitteilungen, die an einzelne Verwender oder Gruppen von Verwendern adressiert werden, während einer Militärübung oder durch Polizeikräfte im Einsatz, Feuerwehren bei der Brandbekämpfung wie in einem Waldbrand oder Taxifahrer verwendet werden, um die Position anderer Taxis der gleichen Taxiflotte zu bestimmen.

45. Verfahren nach einem der Ansprüche 25 bis 44, **dadurch gekennzeichnet, dass** das zellulare Funkkommunikationsnetzwerk ein GSM-Netzwerk ist.

46. Empfänger zur Verwendung in einem System nach einem der Ansprüche 1 bis 24 und mit einem Sender-Empfänger, Speichermitteln zum Speichern einer Anzahl von Graphikkartenbildern und einer Anzahl von geographiebezogenen Informationssymbolen zum selektiven Anzeigen, wobei jedes der Symbole ausgebildet ist, selektiv einem angezeigten Kartenbild überlagert zu werden, um geographiebezogene Information anzuzeigen, und Anzeigemitteln zum Anzeigen der Graphikkartenbilder und der Symbole abhängig vom Empfang von SMS-Mitteilungen zum selektiven Auffinden eines Kartenbildes und von Symbolen aus den Speichermitteln zur Anzeige auf den Anzeigemitteln, **dadurch gekennzeichnet, dass** es ausgebildet ist für eine SMS-Mitteilung, die zumindest ein anzuzeigendes Symbol definiert, zusammen mit seinen geographischen Koordinaten.

47. Empfänger nach Anspruch 46, **dadurch gekennzeichnet, dass** der Empfänger-Sender ein GSM-Empfänger-Sender ist, der ausgebildet ist, SMS-Mitteilungen zu empfangen und zu senden, die geographiebezogene Informationen betreffen.

48. Empfänger nach Anspruch 46 oder 47, **dadurch gekennzeichnet, dass** der Sender-Empfänger einen GPS-Empfänger aufweist.

## Revendications

1. Système de radiocommunication cellulaire comprenant un réseau de radiocommunication cellulaire prévu pour fournir un service de message court (SMS) et incluant une pluralité de stations de téléphonie mobile et un certain nombre de stations de base, dont chacune est connectée à un réseau téléphonique commuté public et prévue pour communiquer avec un certain nombre des dites stations mobiles, et comprenant au moins une unité d'affichage graphique portable prévue pour communiquer avec le dit réseau, via une station mobile, en utilisant le dit service de message court (SMS) et, en réponse à la réception de messages SMS, pour récupérer sélectivement et afficher des images de carte graphique stockées et pour superposer sélectivement des symboles d'information géographiquement liés prédéfinis stockés, sur une image affichée,
**caractérisé en ce qu'**un message SMS définit au moins un symbole à afficher, ainsi que ses coordonnées géographiques.

2. Système selon la revendication 1, **caractérisé en ce que** la dite au moins une unité d'affichage graphique fait partie d'un ordinateur personnel portable (PPC), et **en ce que** le dit PPC est prévu pour communiquer avec le dit réseau, via une station mobile, en utilisant le dit service de message court (SMS).

3. Système selon la revendication 2, **caractérisé en ce que** les dites images de carte graphique et les dits symboles sont stockés par le dit PPC.

4. Système selon la revendication 2 ou 3, **caractérisé en ce que** le dit PPC comprend un écran d'affichage ; un moyen de stockage dans lequel sont stockées une série d'images de cartes graphiques et un certain nombre de symboles d'information géographiquement liés pour affichage sélectif sur le dit écran d'affichage, chacun des dits symboles pouvant être sélectivement superposé sur une image de carte affichée pour indiquer une information géographiquement liée, et un moyen de sélection, qui répond à la réception de message SMS, pour extraire sélectivement une image de carte et des symboles à partir du dit moyen de stockage pour affichage sur le dit écran d'affichage.

5. Système selon une quelconque des revendications précédentes, **caractérisé en ce que** les dits symboles d'information, superposés sur une image de carte affichée, sont continuellement mis à jour avec une information courante par les dits messages SMS.

6. Système selon une quelconque des revendications précédentes, **caractérisé en ce que** les dites images de carte graphique et les dits symboles d'information sont stockés dans un CD-ROM et/ou un disque dur.

7. Système selon la revendication 6, lorsqu'elle dépend d'une quelconque des revendications 2 à 5, **caractérisé en ce que** le dit CD-ROM et/ou un disque dur fait partie du dit PPC.

8. Système selon une quelconque des revendications précédentes, **caractérisé en ce que** les dits symboles d'information stockés sont prédéfinis et prévus pour diverses applications.

9. Système selon la revendication 7, lorsqu'elle dépend d'une quelconque des revendications 2 à 7,
**caractérisé en ce que** le dit PPC est prévu, à réception du dit message SMS, pour superposer le dit au moins un symbole sur une image de carte graphique de la zone géographique concernée, à une position définie par les dites coordonnées géographiques.

10. Système selon une quelconque des revendications précédentes, **caractérisé en ce que** les dits symboles d'information comprennent des informations de texte et une flèche prévue pour être pointée à des coordonnées géographiques d'une image de carte définie par un message SMS.

11. Système selon une quelconque des revendications précédentes, **caractérisé en ce qu'**un moyen de diffusion cellulaire de SMS est utilisé pour distribuer des messages définissant une information géographiquement liée considérée comme étant d'application générale par un opérateur de réseau.

12. Système selon la revendication 11, **caractérisé en ce que** les dits messages SMS sont utilisés pour mettre à jour continuellement des symboles d'information, superposés sur une image de carte graphique affichée, avec des informations courantes.

13. Système selon la revendication 11 ou 12,
**caractérisé en ce que** le dit moyen de diffusion cellulaire de SMS est prévu pour limiter le volume d'information distribué par transmission d'un certain nombre de messages SMS, pour différentes applications, sur différents endroits géographiques.

14. Système selon une quelconque des revendications 11 à 13, **caractérisé en ce que** les dits messages SMS sont répétitivement diffusés, à intervalles, pendant un laps de temps pendant lequel un message est valide.

15. Système selon une quelconque des revendications 11 à 14, **caractérisé en ce que** les dits messages SMS comprennent une indication, identifiable par une station mobile, qu'une information précédemment transmise est en cours de mise à jour.

16. Système selon une quelconque des revendications 11 à 15, **caractérisé en ce que** le dit moyen de diffusion cellulaire de SMS est utilisé pour la distribution de messages concernant la situation météorologique courante dans différentes zones géographiques ; des informations touristiques locales ; des informations routières ; des informations de trafic ; des positions géographiques de stations d'essence de différentes sociétés, de banques, de magasins de détail et analogues ; la disponibilité de séjour en hôtel ; et, dans une course de bateaux à voile, les positions relatives des bateaux dans la course.

17. Système selon une quelconque des revendications 1 à 10, **caractérisé en ce que** les messages SMS sont adressés à des utilisateurs uniques, ou à des groupes d'utilisateurs.

18. Système selon la revendication 17, **caractérisé en ce que** les dits messages SMS définissent des informations géographiques liées sélectionnées par un utilisateur du réseau.

19. Système selon la revendication 18, **caractérisé en ce que** la dite information géographiquement liée concerne une zone géographique limitée.

20. Système selon la revendication 19, **caractérisé en ce que** la dite zone géographique limitée est locale pour un utilisateur, ou un groupe d'utilisateurs, pour lequel l'information a été demandée, et **en ce que** les limites géographiques sont indiquées manuellement ou par utilisation d'un moyen de fixation de position de station mobile.

21. Système selon la revendication 20, **caractérisé en ce que** la dite indication manuelle est fournie par une zone marquée sur une carte synoptique par le dit utilisateur, ou groupe d'utilisateurs.

22. Système selon la revendication 19, **caractérisé en ce que** la dite zone géographique limitée est locale pour un utilisateur, ou un groupe d'utilisateurs, pour lequel l'information a été demandée, **en ce qu'**une station mobile du dit utilisateur, ou de chaque membre du dit groupe d'utilisateurs, est pourvue d'un récepteur GPS pour déterminer la dite position géographique de la station mobile, et **en ce que** la dite station mobile est prévue pour transmettre la dite information de position à un fournisseur de service utilisant le dit moyen de message SMS.

23. Système selon une quelconque des revendications 17 à 22, **caractérisé en ce que** les dits messages SMS adressés à des utilisateurs uniques, ou groupes d'utilisateurs, sont prévus pour une utilisation pendant un exercice militaire, ou par des forces de police en reconnaissance, des pompiers combattant un incendie, tel qu'un incendie de forêt, ou un chauffeur de taxi pour déterminer la position d'autres taxis dans la même flotte de taxis.

24. Système selon une quelconque des revendications précédentes, **caractérisé en ce que** le dit réseau de radiocommunication cellulaire est un réseau GSM.

25. Procédé pour la distribution et l'affichage d'informations géographiquement liées, au moyen de messages SMS, le dit procédé étant utilisé dans un système de radiocommunication cellulaire incluant un réseau de radiocommunication cellulaire prévu pour fournir un service de message court (SMS), dans lequel le dit réseau comprend une pluralité de stations téléphoniques mobiles et un certain nombre de stations de base, dont chacune est connectée à un réseau téléphonique commuté public et peut communiquer avec un certain nombre de dites stations mobiles, le dit procédé comprenant les étapes de :
stockage d'une série d'images de carte graphique et d'un certain nombre de symboles d'information géographiquement liés pour affichage sélectif sur une unité d'affichage portable, chacun des dits symboles étant prévu pour être sélectivement superposé sur une image de carte affichée, afin d'indiquer des informations géographiquement liées, et
en réponse à la réception de messages SMS venant du dit réseau, récupération et affichage d'une image de carte stockée et de symboles définis par les dits messages SMS, dans lequel le message SMS définit au moins un symbole requis pour être affiché ainsi que ses coordonnées géographiques.

26. Procédé selon la revendication 25, **caractérisé par** l'étape de mise à jour continuelle des symboles d'information, superposés sur une image de carte affichée, avec une information courante définie par les dits messages SMS.

27. Procédé selon la revendication 25 ou la revendication 26, **caractérisé par** le stockage des dites images de carte graphique et des dits symboles d'information dans un CD-ROM et/ou un disque dur.

28. Procédé selon la revendication 27, **caractérisée en ce que** le dit CD-ROM et/ou un disque dur font partie d'un PPC.

29. Procédé selon une quelconque des revendications 25 à 28, **caractérisé en ce que** les dits symboles d'information stockés sont prédéfinis et prévus pour diverses applications.

30. Procédé selon la revendication 29, **caractérisé en ce que**, à réception du dit message SMS, le dit au moins un symbole est superposé sur une image de carte graphique affichée, à une position définie par les dites coordonnées géographiques.

31. Procédé selon une quelconque des revendications 25 à 30, **caractérisé en ce que** les dits symboles d'information comprennent une information de texte et une flèche prévue pour être pointée à des coordonnées géographiques d'une image de carte définie par un message SMS.

32. Procédé selon une quelconque des revendications 25 à 31, **caractérisé en ce que** la distribution de messages SMS utilise un moyen de diffusion cellulaire de SMS du dit réseau, les dits messages distribués définissant une information géographiquement liée considérée comme étant d'application générale par un opérateur du réseau.

33. Procédé selon la revendication 32, **caractérisé par** l'étape d'utilisation des dits messages SMS pour mettre à jour continuellement des symboles d'information, superposés sur une image de carte graphique affichée, avec une information courante.

34. Procédé selon la revendication 32, ou la revendication 33, **caractérisé par** l'étape de transmission d'un certain nombre de messages SMS, pour différentes applications, sur différentes positions géographiques, afin de limiter le volume d'information distribuée par chacun des dits messages SMS.

35. Procédé selon une quelconque des revendications 32 à 34, **caractérisé par** l'étape de diffusion répétée des dits messages SMS, à intervalles, pendant un laps de temps pendant lequel un message est valide.

36. Procédé selon une quelconque des revendications 32 à 35, **caractérisé par** l'étape d'inclusion, dans les dits messages SMS, d'une indication, identifiable par une station mobile, que l'information précédemment transmise est mise à jour.

37. Procédé selon une quelconque des revendications 32 à 36, **caractérisé par** l'étape d'utilisation du dit moyen de diffusion cellulaire de SMS pour la distribution de messages concernant la situation météorologique présente, dans différentes zones géographiques ; des informations touristiques locales ; des informations routières ; des informations de trafic ; des positions géographiques des stations de remplissage d'essence de différentes compagnies ; la disponibilité de places d'hôtel; et, dans une course de voiliers, les positions relatives des bateaux dans la course.

38. Procédé selon une quelconque des revendications 25 à 31, **caractérisé par** l'étape d'adressage des dits messages SMS à des utilisateurs uniques, ou groupes d'utilisateurs.

39. Procédé selon la revendication 38, **caractérisé en ce que** les dits messages SMS définissent une information géographique liée sélectionnée par un utilisateur de réseau.

40. Procédé selon la revendication 39, **caractérisé en ce que** la dite information géographique liée concerne une zone géographique limitée.

41. Procédé selon la revendication 40, **caractérisé en ce que** la dite zone géographique limitée est locale pour un utilisateur, pour lequel l'information a été demandée, et **en ce que** les limites géographiques sont indiquées soit manuellement, soit par l'utilisation d'un moyen de fixation de position de station mobile.

42. Procédé selon la revendication 41, **caractérisé par** l'étape dans laquelle le dit utilisateur, ou groupe d'utilisateurs, fournit la dite indication manuelle par marquage d'une zone sur une carte synoptique.

43. Procédé selon la revendication 41, **caractérisé en ce que** la dite zone géographique limitée est locale pour un utilisateur, ou un groupe d'utilisateurs, pour lequel l'information a été demandée, **en ce qu'**une station mobile du dit utilisateur, ou de chaque membre du dit groupe d'utilisateurs, comprend un récepteur GPS, et **en ce que** le dit procédé comprend les étapes de détermination d'une position géographique d'une station mobile au moyen du dit récepteur GPS, et de transmission de la dite information de position à un fournisseur de service utilisant le dit moyen de message SMS.

44. Procédé selon une quelconque des revendications 38 à 43, **caractérisé en ce que** les dits messages SMS adressés à des utilisateurs uniques, ou à des groupes d'utilisateurs, sont utilisés pendant un exercice militaire ou par des forces de police en reconnaissance, des pompiers combattant un incendie, tel qu'un feu de forêt, ou un chauffeur de taxi pour déterminer la position d'autres taxis de la même flotte de taxis.

45. Procédé selon une quelconque des revendications 25 à 44, **caractérisé en ce que** le dit réseau de radiocommunication cellulaire est un réseau GSM.

46. Récepteur utilisable avec un système selon une quelconque des revendications 1 à 24, et comprenant un émetteur - récepteur, un moyen de stockage pour stocker une série d'images de carte graphique et un certain nombre de symboles d'information géographique liés pour affichage sélectif, chacun des dits symboles pouvant être sélectivement superposé sur une image de carte affichée, pour indiquer une information géographiquement liée ; et un moyen d'affichage pour afficher les dites images de carte graphique et les dits symboles, en réponse à la réception de messages SMS, pour récupérer sélectivement une image de carte et des symboles à partir du dit moyen de stockage pour affichage sur le dit moyen d'affichage,
**caractérisé en ce qu'**il est agencé pour un message SMS définissant au moins un symbole à afficher, en même temps que ses coordonnées géographiques.

47. Récepteur selon la revendication 46, **caractérisé en ce que** le dit émetteur - récepteur est un émetteur récepteur GSM prévu pour recevoir et émettre des messages SMS définissant une information géographiquement liée .

48. Récepteur selon la revendication 46 ou la revendication 47, **caractérisé en ce que** le dit émetteur - récepteur comprend un récepteur GPS.
